# EUROPÄISCHE PATENTSCHRIFT

(11) **EP 0 741 258 B1**
(45) Veröffentlichungstag und Bekanntmachung des Hinweises auf die Patenterteilung: **14.04.1999**
(21) Anmeldenummer: 96102817.2
(22) Anmeldetag: 26.02.1996
(51) Int. Cl.: F16H 63/18

(54) **Schaltgetriebe**
Change-speed gearbox
Dispositif de transmission à changement de rapport

(30) Priorität: 05.05.1995 DE 19516651
(43) Veröffentlichungstag der Anmeldung: 06.11.1996
(73) Patentinhaber: Bayerische Motoren Werke Aktiengesellschaft, 80788 München (DE)
(72) Erfinder: Winkam, Gamjad, 85406 Zolling (DE); Biskup, Ernst, 82223 Eichenau (DE); Erbersdobler, Ewald, 81476 München (DE)

(56) Entgegenhaltungen:
- EP-A- 0 654 624
- DE-C- 708 872
- DE-C- 943 742
- FR-A- 2 500 101
- GB-A- 2 054 773
- US-A- 2 577 019
- US-A- 5 136 780
- PATENT ABSTRACTS OF JAPAN vol. 009, no. 149 (M-390), 25.Juni 1985 & JP-A-60 026858 (KOUYOU SEIKI KK), 9.Februar 1985,

## Beschreibung

Die Erfindung betrifft ein Schaltgetriebe nach dem Oberbegriff des Hauptanspruchs, wie es aus der US-A-2 577 019 bekannt ist.

Es ist weiterhin bereits bekannt, über in Schaltgetrieben eingebaute Schaltwalzen den Schaltvorgang zu bewerkstelligen. Die DE-OS 28 08 894 beschreibt ein solches Schaltgetriebe, insbesondere für schwere Motorräder, bei dem die Schaltgabeln mit je einem Zapfen versehen sind, der jeweils in eine Nut einer Schaltwalze hineinragt. Eine Drehung der Schaltwalze bewirkt je nach Kontur der jeweiligen Nut den Schaltvorgang durch Verschieben einer Schaltgabel auf der Schaltstange. Die Nuten auf der Schaltwalze sind so angeordnet, daß deren Drehung ein Verschieben der Schaltgabeln in der Weise verursacht, daß alle Gänge des Getriebes sequentiell durchgeschaltet werden.

Das beschriebene Schaltgetriebe hat den Nachteil, daß aufgrund des Raumbedarfs der Schaltwalze das Getriebe größer gebaut werden muß. Außerdem ist die Zwangsabfolge der Schaltstellungen des Getriebes ungünstig, es kann das Einlegen eines Ganges nicht übersprungen werden und beim Einlegen der Neutralposition müssen ebenfalls die bis dahin gemachten Schaltvorgänge zwangsläufig wieder durchfahren werden.

Aufgabe der Erfindung ist es, ein gattungsgemäßes, mittels Schaltwalze betätigbares Schaltgetriebe so auszubilden, daß es möglichst wenig Bauraum beansprucht.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung wird auf eine separate Schaltstange, die parallel zu der Schaltwalze im Getriebegehäuse gelagert ist, verzichtet. Die Funktionen der Schaltstange werden vor der Schaltwalze mitübernommen, auf der dementsprechend die Schaltgabeln verschieblich gelagert sind. Das hat den Vorteil, daß im Getriebegehäuse der Bauraum für die Schaltwalze eingespart werden kann. Außerdem entfällt die Schaltstange als Bauteil.

Nach der Erfindung umgreift jede Schaltgabel die Schaltwelle auf mehr als der Hälfte ihres Umfangs, wobei jede Schaltgabel durch einen in eine jeweilige Umfangsnut der Schaltwalze hineinragenden Vorsprung in Richtung der Schaltwalzenlängsachse formschlüssig mit der Schaltwalze verbunden ist. Ein in der Schaltgabelnabe nach innen gerichteter Vorsprung bewirkt, daß zur Führung der Schaltgabel auf der Schaltwalze für die Formschlußverbindung kein zusätzlicher Bauraum innerhalb des Getriebegehäuses beansprucht wird.

Nach der Erfindung ist der Vorsprung als Gleitstein ausgebildet und bezüglich der Schaltwalze in im wesentlichen radialer Richtung bewegbar. Das hat den Vorteil, daß der Gleitstein aus der Umfangsnut der Schaltwalze herausgehoben werden kann und somit die Zwangssteuerung der Schaltgabel durch die Schaltwalzennut aufhebbar ist. Da die Umfangsnut der Schaltwalze in radialer Richtung erfindungsgemäß mindestens teilweise abgestuft ausgebildet ist, kann der Gleitstein auf die Nutstufe herausgehoben werden, was bei einer entsprechend gestalteten Nut die Möglichkeit bietet, die formschlüssige Führung der Schaltgabel so auszubilden, daß verschiedene Bewegungsabfolgen der selben Schaltgabel möglich sind. So ist es z. B. möglich, die abgestuften Nuten der Schaltwalze so zu gestalten, daß durch das Herausheben des entsprechenden Gleitsteins sofort die Neutralposition der Getriebeschaltung eingelegt wird, ohne daß vorher andere Schaltstellungen durchlaufen werden müssen.

Bei einer weiteren bevorzugten Ausführung der Erfindung wird durch in radialer Richtung trapezförmig gestaltete Gleitsteine und Umfangsnuten, wobei der Gleitstein auch kegelförmig ausgebildet sein kann, eine Zentrierung der Formschlußverbindung während des Einfahrens des Gleitsteins ermöglicht. Das hat den Vorteil, daß die richtige Stellung der Schaltgabel von selbst erreicht wird, auch wenn die Schaltgabel nicht exakt über der Umfangsnut steht. So können bei der Getriebefertigung zwischen den Bauteilen größere Toleranzabmaße in Kauf genommen werden. Der Gleitstein kann so nicht so leicht verhaken.

Bei einer weiteren bevorzugten Ausführung der Erfindung ist die Umfangsnut so gestaltet, daß sich in Längsrichtung der Schaltwalze gesehen ihre Steigung im wesentlichen kontinuierlich ändert. Bei gleichförmiger Drehung der Schaltwalze bewegt sich somit die Schaltgabel ungleichförmig. Diese ungleichförmige Bewegung der Schaltgabel kann vorteilhafterweise dazu genutzt werden, daß der Synchronisiervorgang beim Festlegen eines Losrades langsamer stattfindet, als das Verschieben der Schaltgabel im Durchschaltbereich. Das wiederum hat Einfluß auf die Haltbarkeit der Bauteile der Schalteinrichtung wie z. B. Synchronringe usw..

Bei einer weiteren bevorzugten Ausführung der Erfindung sind die Gleitsteine an der Schaltgabel durch eine Exzenterschraube in Längsrichtung der Schaltwalze verstellbar befestigt. Dadurch können vorteilhafterweise die Schaltgabeln im Getriebe justiert werden, was ebenfalls ermöglicht, daß beim Herstellen der Schalteinrichtung die Fertigungstoleranzen erhöht werden können.

Wenn die Schaltwalze als gebaute Welle im Sinterverfahren hergestellt wird, deren Trennfugen der einzelnen Teile mindestens in jeder Umfangsnut liegen, wird erreicht, daß die Schaltwalze mit ihrer komplizierten Form kostengünstig hergestellt werden kann.

Ein bevorzugtes Ausführungsbeispiel der Erfindung ist in der nachfolgenden Beschreibung mit der zugehörigen Zeichnung dargestellt. Sie zeigt in
- Figur 1: einen Abschnitt einer Schaltwalze mit zwei Schaltgabeln,
- Figur 2: eine Abwicklung der Schaltwalze,
- Figur 3: einen Gleitstein in der Umfangsnut einer Schaltwalze, Schnitt A-A aus Figur 2,
- Figur 4: eine Exzenterschraube,
- Figur 5: die Formgebung einer Umfangsnut der Schaltwalze in vergrößertem Maßstab,
- Figur 6: eine gebaute Schaltwalze mit im Sinterverfahren hergestellten Segmenten,
entsprechend der Erfindung.

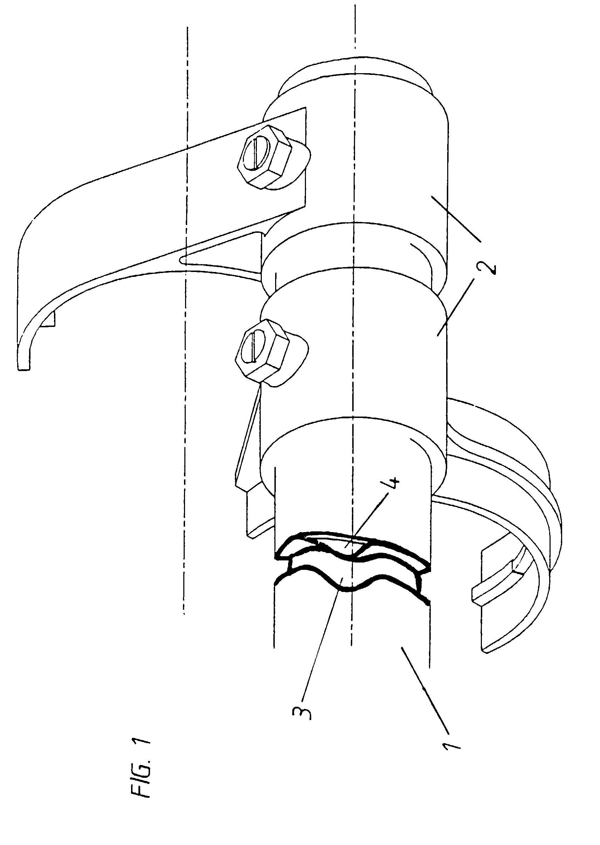

Figur 1 zeigt eine Schaltwalze 1 mit darauf geführten Schaltgabeln 2. Jede Schaltgabel 2 kann durch Verschieben auf der Schaltwalze 1 nach links oder rechts jeweils über eine nicht gezeichnete Schalteinrichtung ein nicht gezeichnetes Losrad auf der nicht gezeichneten Losradwelle festlegen. Dadurch wird die jeweils gewünschte Gangstufe des Schaltgetriebes eingelegt. In der Mittelstellung befindet sich jede Schaltgabel 2 in ihrer Neutralstellung. Sind alle Schaltgabeln 2 in dieser Neutralstellung, so ist kein Losrad festgelegt und deshalb keine Gangstufe eingelegt. Die gezeichnete Schaltwalze 1 für ein Kraftfahrzeuggetriebe ist für drei Schaltgabeln 2, wovon eine nicht gezeichnet ist, zum Schalten von fünf Vorwärts- und einem Rückwärtsgang vorgesehen. Die Verschiebebewegung der jeweiligen Schaltgabel 2 zum Einlegen der entsprechenden Schaltstufe wird durch eine Drehbewegung der Schaltwalze 1 erzeugt, auf die Weise, daß jede Schaltgabel 2 einen zur Schaltwalze 1 hin gerichteten Vorsprung besitzt, der in eine Umfangsnut 3 der Schaltwalze 1 hineinragt. In der Zeichnung ist die Umfangsnut 3 auf der Schaltwalze 1 für eine nicht gezeichnete Schaltgabel sichtbar. Die beiden anderen Umfangsnuten 3 für die gezeichneten Schaltgabeln 2 sind nicht sichtbar, da sie in dieser Ausführung von den Schaltgabeln 2 völlig umgriffen werden. Alle Umfangsnuten 3 haben wie die sichtbare Umfangsnut 3 eine bestimmte Kontur in Längsrichtung der Schaltwalze 1 und sind ebenso in radialer Richtung konturiert. Die Kontur der Umfangsnut 3 in Längsrichtung steuert die Bewegungsabfolge der Schaltgabeln 2 so, daß nacheinander die einzelnen Gänge des Schaltgetriebes sequentiell durch die Drehung der Schaltwalze 1 einlegbar sind. Die Kontur in der Umfangsnut 3 in radialer Richtung weist zum einen eine Stufe 4 auf, die mindestens an Teilen des Umfangs der Umfangsnut 3 angebracht ist. Zum anderen kann die Umfangsnut 3 in radialer Richtung trapezförmig ausgebildet sein.

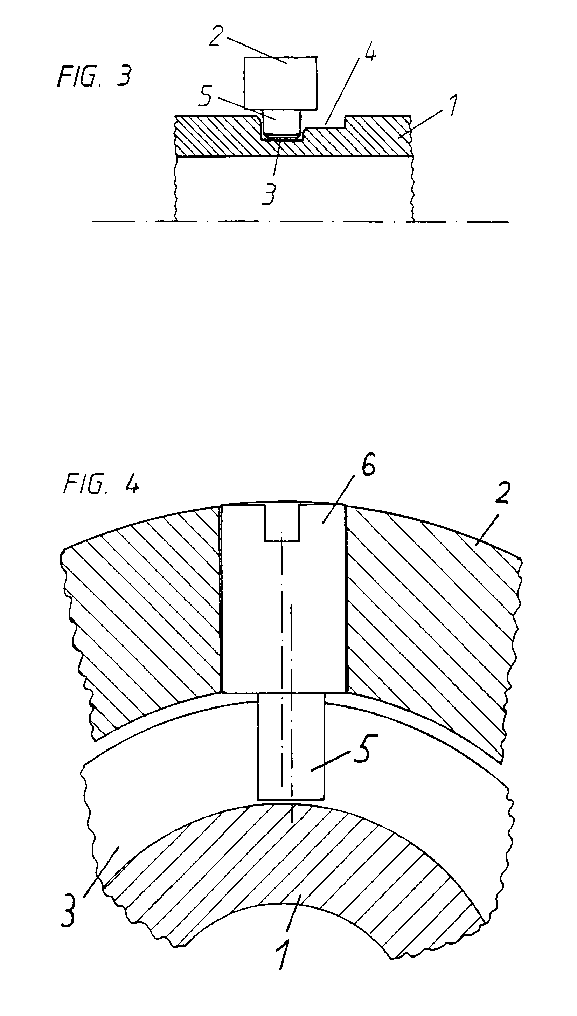

Die Stufe 4 innerhalb der Umfangsnut 3 ist so angebracht, daß eine andere Bewegungsabfolge der Schaltgabeln 2 entsteht, wenn der in die Umfangsnut 3 hineinragende Vorsprung einer oder mehrerer Schaltgabeln 2 in radialer Richtung weniger als bis zur Stufe 4 der Umfangsnut 3 in diese hineinragt. So kann durch Veränderung der radialen Lage des Vorsprungs jeder Schaltgabel 2 deren Bewegungsablauf bei Drehung der Schaltwalze 1 verändert werden. Der Vorsprung der Schaltgabel 2 ist hier als Gleitstein 5 (Figur 3) ausgebildet, der an der Nabe der Schaltgabel 2 in radialer Richtung verstellbar so angebracht ist, daß er in die Umfangsnut 3 hineinragt. Die Verstellung des Gleitsteins 5 in radialer Richtung kann z. B. mechanisch, elektrisch oder hydraulisch erfolgen.

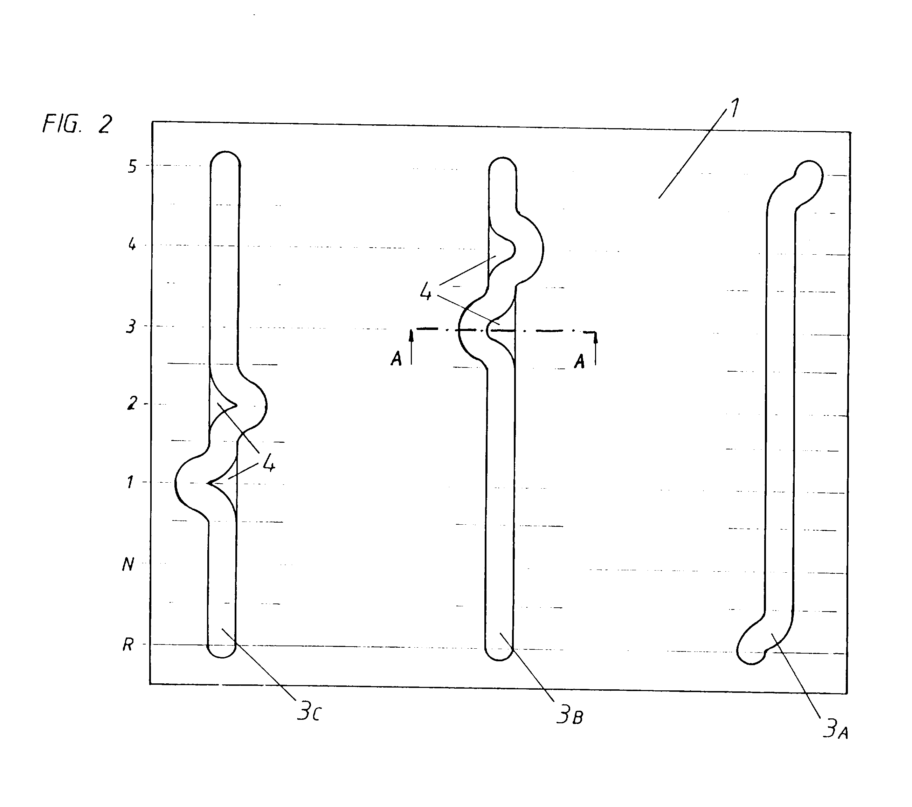

Figur 2 zeigt die drei Umfangsnuten 3 für die Schaltgabeln 2 aus Figur 1 in einer Abwicklung eines Teilbereichs der Schaltwalze 1. Die Umfangsnut 3a dient zur Steuerung der Bewegung der Schaltgabel 2 zum Einlegen des fünften Ganges bzw. des Rückwärtsganges. Die Umfangsnut 3b steuert die Schaltgabel 2 zum Einlegen des dritten oder vierten Ganges, während die Umfangsnut 3c die Schaltgabel für den ersten und zweiten Gang bewegt. Auf der linken Seite der Figur 2 ist die Stellung der Schaltwalze 1 in bezug zur Stellung der Gleitsteine 5 im jeweiligen Gang gekennzeichnet. Befindet sich ein Gleitstein 5 in einer seitlichen Ausbuchtung einer Umfangsnut 3, so ist der entsprechende Gang eingelegt. Durch Drehung der Schaltwalze, die mechanisch, elektrisch oder hydraulisch erfolgen kann, werden alle Getriebegänge sequentiell nacheinander eingelegt. Die Neutralstellung, in der kein Gang eingelegt ist, befindet sich zwischen dem Rückwärtsgang und dem ersten Gang. Hier besitzt keine Umfangsnut 3a bis 3c eine Ausbuchtung. Um die sequentielle Abfolge des Schaltens der Gänge unterbrechen zu können, sind die Umfangsnuten 3b und 3c in radialer Richtung gestuft ausgebildet. Entlang jeder Ausbuchtung der Umfangsnuten 3b und 3c ist in der jeweiligen Umfangsnut in einer bezüglich dem Nutgrund radial weiter außen liegenden Ebene die Stufe 4 ausgebildet. Sie ermöglicht es einem ebenfalls radial nach außen teilweise aus der Umfangsnut 3b, 3c herausbewegten Gleitstein 5 (Figur 3.) eine Umfangnsut 3b, 3c zu durchfahren, ohne daß die jeweilige Schaltgabel 2 auf der Schaltwalze 1 verschoben wird. Damit kann durch das Abheben der jeweiligen Gleitsteine 5 (Figur 3) von jeder Stellung der Schaltwalze 1 aus die Neutralstellung der Schaltwalze 1 eingelegt werden, ohne daß die dazwischenliegenden Gänge sequentiell abfolgend eingelegt werden. Das ermöglicht ein schnelles Einlegen der Neutralstellung ohne Verschleiß der nicht benötigten Schalteinrichtungen.

In Figur 3 ist ein Schnitt der Schaltwalze 1 im Bereich einer Umfangsnut 3 dargestellt. Der Gleitstein 5 befindet sich in der Position, in der eine Schaltgabel 2 auf der Schaltwalze 1 nach links verfahren und der entsprechende Gang eingelegt ist. Die Schaltwalze 1 wurde zum Beispiel mit abgesenktem Gleitstein 5 gedreht, was im Getriebe eine sequentielle Schalffolge ergab. Wäre die Schaltwalze 1 bei abgehobenem Gleitstein 5 verdreht worden, würde sich der Gleitstein 5 auf der Stufe 4 befinden und die Schaltgabel 2 (Figur 1) wäre auf der Schaltwalze 1 nicht nach links verschoben worden. Durch das Abheben des Gleitsteins 5 wird also die Zwangsabfolge der sequentiellen Schaltung aufgehoben und die jeweilige Schaltgabel 2 bleibt in ihrer Mittelstellung beim Drehen der Schaltwalze 1 in die Neutralposition, in der kein Gang eingelegt ist. Die eventuell trapezförmigen Flanken der Umfangsnut 3 verhindern ein leichtes Verkanten des Gleitsteins 5 beim Einfahren in die Umfangsnut 3. Dazu ist der Gleitstein 5 ebenfalls trapez- bzw. kegelförmig ausgebildet.

In Figur 4 ist eine Exzenterschraube 6 dargestellt, mit der der Gleitstein 5 in der Schaltgabel 2 befestigt ist. Durch Verdrehen der Exzenterschraube 6 kann der Gleitstein 5 seitlich in seiner Position zur Umfangsnut 3 zum Ausgleich von Fertigungstoleranzen eingestellt werden.

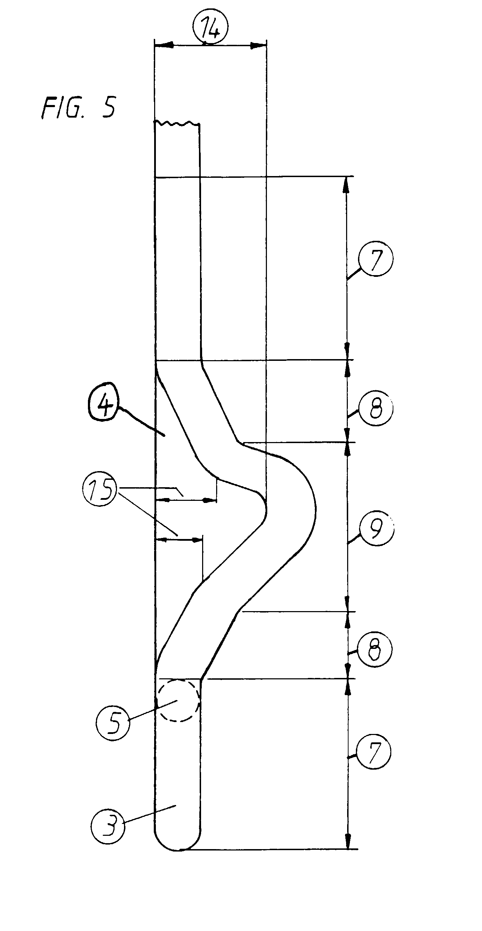

Figur 5 zeigt wiederum eine Abwicklung einer Umfangsnut 3 der Schaltwalze 1, in der eine Ausbuchtung der Umfangsnut 3 mit ihrer Kontur in Längsrichtung der Schaltwalze 1 genau dargestellt ist. Es sind verschiedene Steigungsbereiche in der Umfangsnut 3 erkennbar, durch die bei gleichmäßig drehender Schaltwalze 1 unterschiedliche Verschiebegeschwindigkeiten der Schaltgabel 2 auf der Schaltwalze 1 erreicht werden. Mit 7 ist die Leerwegphase gekennzeichnet, in der die Schaltgabel 2 nicht bewegt wird. Es folgt dann die Vor- und Hauptsynchronphase 8 mit einer langsamen Verschiebegeschwindigkeit der Schaltgabel 2, um den Synchronisiervorgang genügend langsam zu gestalten, was eine lange Lebensdauer der Synchronisiervorrichtung bewirkt. In der Durchschaltphase 9 kann jede Schaltgabel 2 schneller bewegt werden, was den Schaltvorgang verkürzt. Mit 14 sind der Schaltweg der Schaltgabel 2 und mit 15 die verschieden langen Synchronwege bezeichnet. Der kürzere der Synchronwege 15 für die Hochschaltung und der längere für die Rückschaltung.

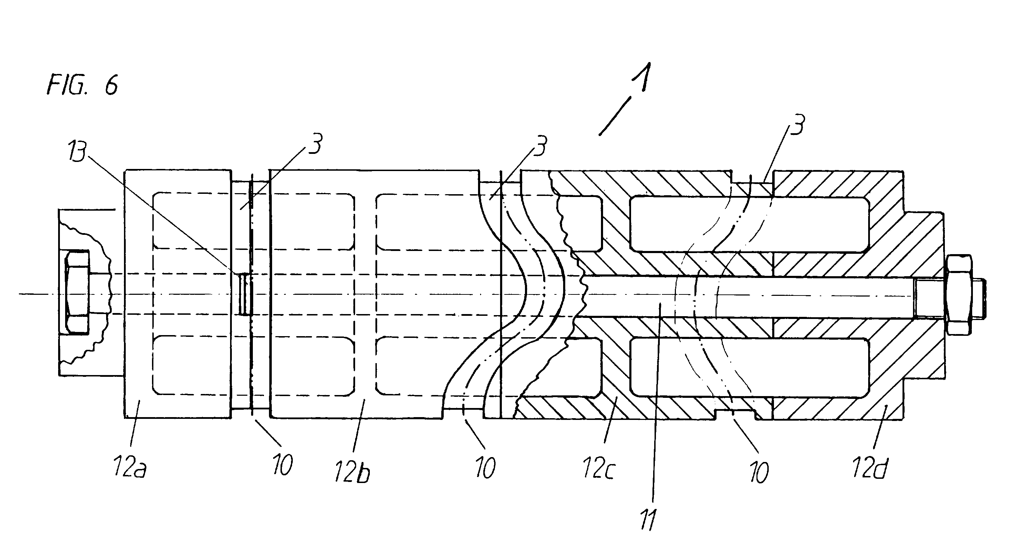

Eine gebaute Schaltwelle 1 ist in Figur 6 dargestellt. Die einzelnen Teile der Schaltwelle 1 sind im Sinterverfahren hergestellt, dazu besitzt diese Trennfugen 10 in jeder Umfangsnut 3. Ein Gewindestift 11 zentriert und verspannt vier Segmente 12a, 12b, 12c, 12d. Eine Verdrehsicherung zwischen den einzelnen Segmenten 12 wird durch jeweils 2 gegenüberliegende Klauen 13 erreicht.

## Patentansprüche

1. Schaltgetriebe, insbesondere für ein Kraftfahrzeug, mit Zahnradpaarungen aus Fest- und Losrädern auf mindestens zwei parallelen Wellen und einer Schalteinrichtung zur formschlüssigen Verbindung in Umfangsrichtung von jeweils einem Losrad mit einer Losradwelle, wobei die Schalteinrichtung aus Verbindungselementen besteht, durch die jeweils ein Losrad auf der Losradwelle festlegbar ist und diese Verbindungselemente über auf mindestens einer Schaltstange geführte Schaltgabeln (2) durch mindestens eine Schaltwalze (1) betätigt werden, wobei die Schaltgabeln (2) auf der Schaltwalze (1), die gleichzeitig die Schaltstange bildet, geführt sind, indem sie die Schaltwalze (1) auf mehr als der Hälfte ihres Umfangs umgreifen und indem jede Schaltgabel (2) mindestens einen zur Schaltwalze (1) hin gerichteten Vorsprung besitzt, der in eine Umfangsnut (3) der Schaltwalze (1) hineinragt, wobei der Vorsprung mindestens einer Schaltgabel (2) durch einen Gleitstein (5) gebildet wird, der bezüglich der Schaltwalze (1) in im wesentlichen radialer Richtung bewegbar ist, dadurch gekennzeichnet, daß die Umfangsnut (3) der Schaltwalze (1) in radialer Richtung mindestens teilweise abgestuft ausgebildet ist.

2. Schaltgetriebe nach Anspruch 1, dadurch gekennzeichnet, daß die Umfangsnut (3) in radialer Richtung trapezförmig und der Gleitstein (5) entsprechend trapez- oder kegelförmig ausgebildet ist.

3. Schaltgetriebe nach einem der Ansprüche 1 oder 2, dadurch gekennzeichnet, daß die Umfangsnut (3) so gestaltet ist, daß sich in Längsrichtung der Schaltwalze (1) gesehen ihre Steigung im wesentlichen kontinuierlich ändert und/oder daß die Steigung in einem Schaltbereich, in dem beim Festlegen eines Losrades der Synchronisiervorgang stattfindet, kleiner ist als in einem 15 Durchschaltbereich (9), in dem kein Synchronisiervorgang stattfindet.

4. Schaltgetriebe nach einem der Ansprüche 1 bis 3, dadurch gekennzeichnet, daß die Gleitsteine (5) an ihrer jeweiligen Schaltgabel (2) durch eine Exzenterschraube (6) in Längsrichtung der Schaltwalze (1) verstellbar befestigt sind.

5. Schaltgetriebe nach einem der Ansprüche 1 bis 4, dadurch gekennzeichnet, daß die Schaltwalze (1) im Sinterverfahren hergestellt ist.

6. Schaltgetriebe nach Anspruch 5, dadurch gekennzeichnet, daß die Schaltwalze (1) als gebaute Welle hergestellt ist, die Trennfugen (10) ihrer einzelnen Segmente (12a bis 12d) mindestens in jeder Umfangsnut (3) besitzt.

## Claims

1. A gear-shift mechanism, especially for a motor vehicle, comprising toothed pairs of fast and loose wheels on at least two parallel shafts and a gear-changing device for positively connecting at least one loose wheel to a respective loose-wheel shaft in the peripheral direction, the gear-changing device comprising connecting elements for fastening each loose wheel on the loose-wheel shaft and the connecting elements being actuated by at least one controller drum (1) via gear-shift forks (2) guided on at least one shift rod, the gear-shift forks (2) being guided on the controller drum (1), which also constitutes the shift rod, in that they extend around more than half the circumference of the controller drum (1) and in that each gear-shift fork (2) has at least one projection which extends towards the controller drum (1) and projects into a peripheral groove (3) on the controller drum (1), wherein the projection on at least one gear-shift fork (2) is formed by a sliding block. (5) which is movable substantially in the radial direction relative to the controller drum (1), characterised in that the peripheral groove (3) on the controller drum (1) is at least partly stepped in the radial direction.

2. A gear-shift mechanism according to claim 1, characterised in that the peripheral groove (3) is trapezoidal in the radial direction and the sliding block (5) is correspondingly trapezoidal or conical.

3. A gear-shift mechanism according to claim 1 or claim 2, characterised in that the peripheral groove (3) is so constructed that its gradient varies substantially continuously in the longitudinal direction of the controller drum (1) and/or in that the gradient, in a region in which the synchronisation process occurs when a loose wheel is fastened, is smaller than in a 1-5 gear-engagement region (9) in which no synchronisation process occurs.

4. A gear-shift mechanism according to any of claims 1 to 3, characterised in that the sliding blocks (5) are fastened to the respective gear-shift forks (2) so as to be adjustable by an eccentric screw (6) in the longitudinal direction of the controller drum (1).

5. A gear-shift mechanism according to any of claims 1 to 4, characterised in that the controller drum (1) is made by sintering.

6. A gear-shift mechanism according to claim 5, characterised in that the controller drum (1) is produced in the form of a built-up shaft, and the joints (10) between the individual segments (12a to 12d) thereof are at least in each peripheral groove (3).

## Revendications

1. Boîte de vitesses notamment pour un véhicule comprenant des paires de pignons fixes et pignons balladeurs sur au moins deux axes parallèles ainsi qu'une installation de commutation pour relier par une liaison par la forme dans la direction périphérique, chaque fois un pignon balladeur avec un axe de pignon balladeur, l'installation de commutation se composant d'éléments de liaison qui mettent en place chaque fois un pignon balladeur sur un axe de pignon balladeur et ces éléments de liaison sont actionnés par au moins une fourchette de commutation (2) conduite sur la tige de commutation par au moins un cylindre de commutation (1), les fourchettes de commutation (2) étant guidées sur le cylindre de commutation (1) ce dernier constituant en même temps la tige de commutation, en ce que les fourchettes entourent le cylindre de commutation (1) sur plus de la moitié de sa périphérie et chaque fourchette de commutation (2) comporte au moins une partie en saillie dirigée vers le cylindre de commutation (1), cette partie en saillie pénétrant dans une rainure périphérique (3) du cylindre de commutation (1),
une partie en saillie d'au moins une fourchette de commutation (2) étant formée par un galet (5) mobile par rapport au cylindre de commutation (1) essentiellement dans la direction radiale,
caractérisée en ce que
la rainure périphérique (3) du cylindre de commutation (1) est au moins en partie étagée dans la direction radiale.

2. Boîte de vitesses selon la revendication 1,
caractérisée en ce que
la rainure périphérique (3) a une forme trapézoïdale dans la direction radiale et le galet (5) a une forme trapézoïdale ou conique correspondante.

3. Boîte de vitesses selon l'une des revendications 1 ou 2,
caractérisée en ce que
la rainure périphérique (3) est conçue pour que vue dans la direction longitudinale du cylindre de commutation (1), sa pente varie d'une manière essentiellement continue et/ou en ce que la pente de la plage de commutation dans laquelle se produit la synchronisation lors de la mise en place du pignon balladeur est inférieure à une plage de commutation (9) dans laquelle il n'y a pas d'opération de synchronisation.

4. Boîte de vitesses selon l'une des revendications 1 ou 3,
caractérisée en ce que
Le galet (5) de chaque fourchette de commutation (2) est mis en place de manière réglable dans la direction longitudinale du cylindre de commutation (1) par une vis excentrique (6).

5. Boîte de vitesses selon l'une des revendications 1 ou 4,
caractérisée en ce que
le cylindre de commutation (1) est fabriqué par frittage.

6. Boîte de vitesses selon la revendication 5,
caractérisée en ce que
le cylindre de commutation (1) est un axe assemblé et les plans de joint (10) des différents segments (12a-12d) se trouvent au moins dans chaque rainure périphérique (3).
